# EUROPEAN PATENT SPECIFICATION

(11) **EP 3 927 569 B1**
(45) Date of publication and mention of the grant of the patent: **27.11.2024**
(21) Application number: 20728673.3
(22) Date of filing: 19.02.2020
(51) Int. Cl.: B60J 7/00

(54) **ROOF ASSEMBLY FOR A WORK VEHICLE**
DACHANORDNUNG FÜR EIN ARBEITSFAHRZEUG
ENSEMBLE TOIT POUR VÉHICULE DE TRAVAIL

(30) Priority: 21.02.2019 IT 201900002547
(43) Date of publication of application: 29.12.2021
(73) Proprietor: CNH Industrial Italia S.p.A., 10156 Torino (IT)
(72) Inventor: SCHMUTZER, Markus, 3373 Kemmelbach (AT)
(74) Representative: CNH Industrial IP Department
(86) International application number: PCT/EP2020/054395
(87) International publication number: WO 2020/169684

(56) References cited:
- EP-A1- 1 375 222
- EP-A1- 2 650 175
- EP-A2- 1 547 836
- DE-A1- 102007 049 111
- DE-U1- 202007 015 435
- FR-A1- 2 996 505

## Description

### TECHNICAL FIELD

The invention concerns a roof assembly for a vehicle, in particular a roof assembly for an agricultural vehicle such as a tractor.

### BACKGROUND OF THE INVENTION

Work vehicles such as agricultural vehicles usually comprises a cabin configured to protect the user of the vehicle for dangerous impact with elements such as branches or stones.

Such agricultural vehicles may comprise a front windscreen and a roof being provided with an opening above the driver seat, next to the front windscreen.

Consequently, such models are also provided with a sunshade assembly having at least the purpose of covering the opening on the roof.

A sunshade assembly with the above purpose may be mounted on the roof, immediately behind the opening, to form a roof assembly and usually includes a roller blind and a rod, which is adapted to slide below the opening and carry one end of the roller blind for extending and retracting the latter.

More in detail, the rod slides between a backward position, in which the roller blind is mostly wounded, and an advanced position, in which the roller blind is unwound and covers the opening as shown in DE202007015435U1 or EP1547836 A2.

In general, the need is felt to provide the known roof assemblies with locking elements to keep the advanced position of the rod in a stable and tough manner while maintaining simplicity and lightness of this latter.

In fact, without an effective locking of the rod in the advanced position, the same rod might move and vibrate in an uncontrolled manner, with uncomfortable effects on the user.

The above need becomes more pressing in case the sunshade assembly is suitable for covering also the front windscreen.

Indeed, some of the previously described sunshade assemblies are also provided with a rigid sun visor carried by the rod in a pivotal manner to cover the front windscreen when the rod is in the advanced position; the rigid sun visor increases the weight supported by the rod and the occurrence of vibrations, especially when handled by the user.

Solutions of the above kind are disclosed, for instance, in EP1375222B1 and in WO2008040892A1.

Although the simplicity and compactness of such solutions, practical issues arises for stably locking the rod while allowing rotation of the visor.

Therefore, the need is also felt to improve the latter solutions from the point of view of their stability in use and robustness in an optimized and economic manner.

An aim of the invention is to satisfy at least one of the above-mentioned needs.

### SUMMARY OF THE INVENTION

The aforementioned aim is reached by a roof assembly for a vehicle, as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a lateral view of an agricultural vehicle comprising a roof assembly according to the invention;
- Figure 2 is a front view of the agricultural vehicle of Figure 1;
- Figure 3 shows the roof assembly in perspective and in an enlarged scale;
- Figure 4 is a perspective view, in a further enlarged scale, of a detail of the roof assembly;
- Figure 5 is a lateral view of the detail of Figure 4 coupled to a sliding rod of the roof assembly;
- Figures 6, 7, 8, and 9 are lateral views of the detail of Figure 4 in respective distinct operative conditions; and
- Figure 10 is an enlarged perspective view of a further detail of the roof assembly.

### DETAILED DESCRIPTION OF THE INVENTION

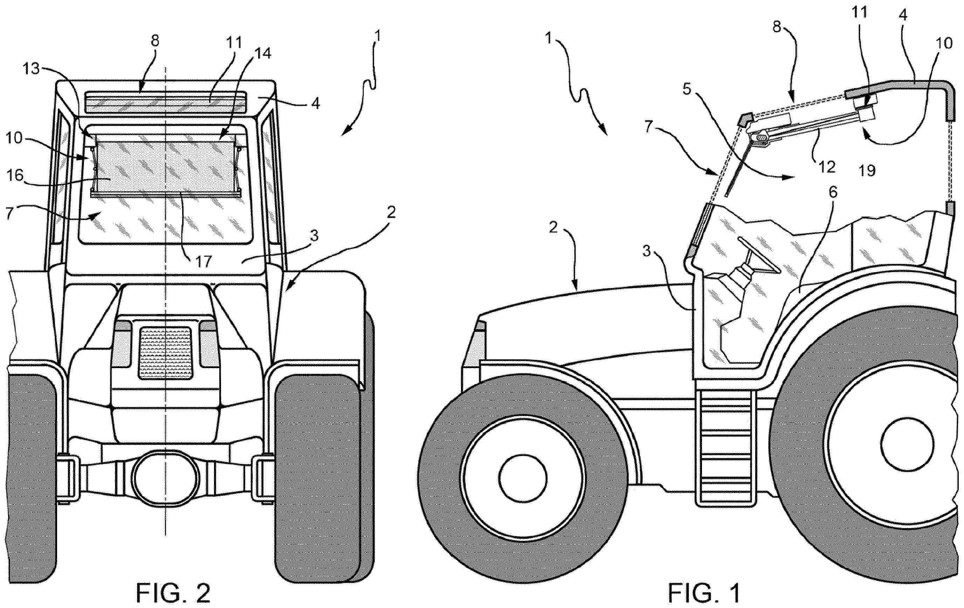

With reference to Figures 1 and 2, reference numeral 1 refers to an agricultural vehicle comprising a chassis 2 provided with a cab defined by a plurality of walls, including e.g. a front wall 3 and a roof 4, for defining a driving compartment 5.

For the sake of clarity, terms like "front", "rear", "advanced", "backward", "behind" etc. refers hereinafter to a forward driving direction of vehicle 1.

Agricultural vehicle 1 comprises a driver seat 6 within driving compartment 5, while front wall 3 and roof 4 respectively have a front windscreen or opening 7, and a top transparent portion or opening 8, correspondingly in front of and above the driver seat 6.

Furthermore, agricultural vehicle 1 comprises a sunshade assembly 10 according to the invention, which is carried by the roof 4 and configured for covering the top opening 8 and, advantageously, the front windscreen 7.

Sunshade assembly 10 and roof 4 are both constitutive parts of a roof assembly of the vehicle 1.

Sunshade assembly 10 comprises a frame 11, which is fixedly coupled to roof 4 behind top opening 8 and is arranged below the latter. Frame 11 carries in a fixed position a guide device 12 extending along a first direction A, almost parallel to roof 4, until ending next to front wall 3.

With detail, guide device 12 extends between a back end, behind top opening 8, and a front opposite end next to front wall 3. In particular, guide device 12 comprises a couple of guide members 12a, more precisely a couple of rectilinear parallel rails along first direction A.

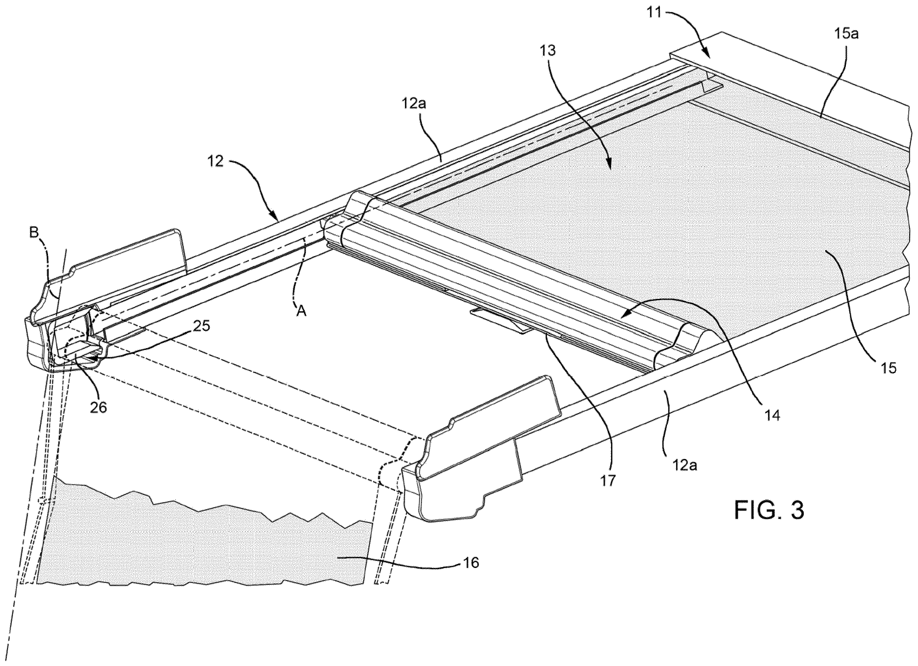

Moreover, as shown in Figure 3, sunshade assembly 10 comprises a deployable shade device 13, which is carried by guide device 12 and is deployable or extendable along first direction A, in such a manner to cover the top opening 8.

Advantageously, the deployable shade device 13 is further deployable along a second direction B, transversal to first direction A, in such a manner to cover also the front windscreen 7.

More in detail, deployable shade device 13 comprises a sliding support, precisely a rod 14, which is coupled to the guide device 12 in a sliding manner along first direction A.

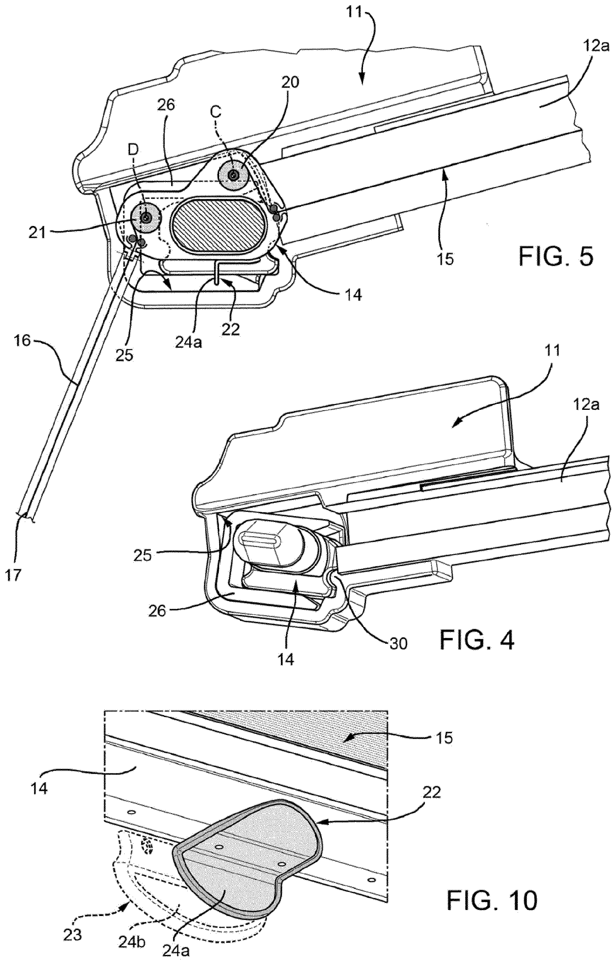

Moreover, deployable shade device 13 further comprise a first sun visor 15 and, preferably, a second sun visor 16 both having respective portions carried by rod 14 on an inner thereof, as shown in Figure 5.

Specifically, first sun visor 15 has an end 15a carried in a fixed position by frame 11 or roof 4 and is extensible along first direction A through the displacement of rod 14 toward the front end of guide device 12.

Sun visor 15 i.e. reaches the smallest extension, namely a retracted configuration, when rod 14 is moved to the back end of guide device 12, whereas the same sun visor 15 reaches a larger extension, namely a deployed configuration, when rod 14 is moved to the front end of guide device 12.

On the other hand, second sun visor 16 is extensible along second direction B and is provided with a movable end 17, which is displaceable along second direction B between a position closest to rod 14 (Figure 3), in which sun visor 16 is in a respective retracted configuration, and a position farthest from rod 14 (Figure 2), in which sun visor 16 is in a respective deployed configuration such as to cover the front windscreen 7, partly in the embodiment shown.

In particular, first sun visor 15 and, preferably, second sun visor 16 comprise respective roller blinds 20, 21, more specifically flexible curtains, which are respectively housed within rod 14 and woundable around axes C, D (Figure 5) fixed with respect to rod 14 and, in the embodiment shown, both horizontal and orthogonal to the driving direction of vehicle 1.

When the first and second sun visors 15, 16 are in the respective deployed configurations, the roller blinds 20, 21 are almost completely unwound.

Moreover, first and second sun visor 15, 16 are provided with corresponding return devices (not shown) of known kind that respectively operate to tension the first and second sun visor 15, 16 themselves, as well as to bring them in the retracted configuration autonomously.

For instance, return devices are winding devices respectively coupled to roller blinds 20, 21 to wind back the roller blinds 20, 21 themselves when at least partially unwound. Precisely, winding devices may comprise torsional spring respectively wound around axes C, D and coupled to roller blinds 20, 21 to wind back these latter as said above.

In order to ease a manual displacement of rod 14, sunshade assembly 10 further comprises a handle 22 (Figure 10), which is carried by rod 14 in a fixed position, more precisely on a bottom portion of rod 14.

Similarly, sunshade assembly 10 comprises, moreover, another handle 23 (also shown in Figure 3), which is carried by the end 17 of second sun visor 16 in a fixed position.

Handles 22, 23 comprise respective backs 24a, 24b that, in the embodiment shown, face to each other when end 17 is in the position closest to rod 14.

Sunshade assembly 10 further comprises restraining devices to keep both first and second sun visor 15, 16 in the respective deployed configurations, against the action of the aforementioned return devices.

For example, sunshade assembly 10 comprises a known kind trigger mechanism associated to second sun visor 16 and activating in the deployed positon thereof. Such a known kind of trigger mechanism is neither illustrated nor described in further detail, for the sake of brevity. Handle 23 may be exploited by the user for releasing the trigger mechanism, for instance by the pressure of a button on handle 23 or by slightly pulling down handle 23.

On the other hand, for keeping first sun visor 15 in the deployed configuration, sunshade assembly 10 comprises a locking seat 25, which is defined by frame 11 and is adjoined to the front end of guide device 12 or, in other words, is arranged immediately downstream of guide device 12, according to the driving direction of vehicle 1.

Locking seat 25 receives rod 14 when first sun visor 15 is in the deployed configuration; here, rod 14 disengage the guide device 12 and is movable within locking seat 25 between an incoming position, in which is aligned with guide device 12 (more precisely with both guide members 12a), and a locking position, in which is prevented from escaping from locking seat 25, such that the first sun visor 15 is kept in the deployed configuration against the action of the corresponding return device.

More in detail, the restraining device associated to first sun visor 15 comprises a couple of identical support elements 26, of which only one in shown in Figures 3-9, and preferably defined by a couple of receptacles.

Support elements 26 are respectively arranged adjacent to guide members 12a, within locking seat 25, and engaged in contact by rod 14 in the incoming position, such that rod 14 is supported by the support elements 26 in the incoming position.

Support elements 26 are movable within locking seat 25 to carry the rod 14 toward the locking position and, more precisely, are coupled to frame 11 in a swiveling manner about a hinge axis H, fixed with respect to frame 11.

When the first sun visor 15 is in the retracted configuration, support elements 26 are maintained, for example by means of elastic reaction of torsional springs, in a receiving position, in which form respective extensions of guide members 12a or, in other words, an extension of guide device 12, such that rod 14 can reach the incoming position by sliding along support elements 26.

On the other hand, when first sun visor 15 is in the deployed configuration and rod 14 is in the locking position, the support elements 26 still support rod 14, precisely in a sliding manner, and are displaced from the receiving position, specifically rotated, such that rod 14 and first sun visor 15 cannot anymore engage with guide device 12 and come back to retracted configuration, respectively, despite the action of the corresponding return device.

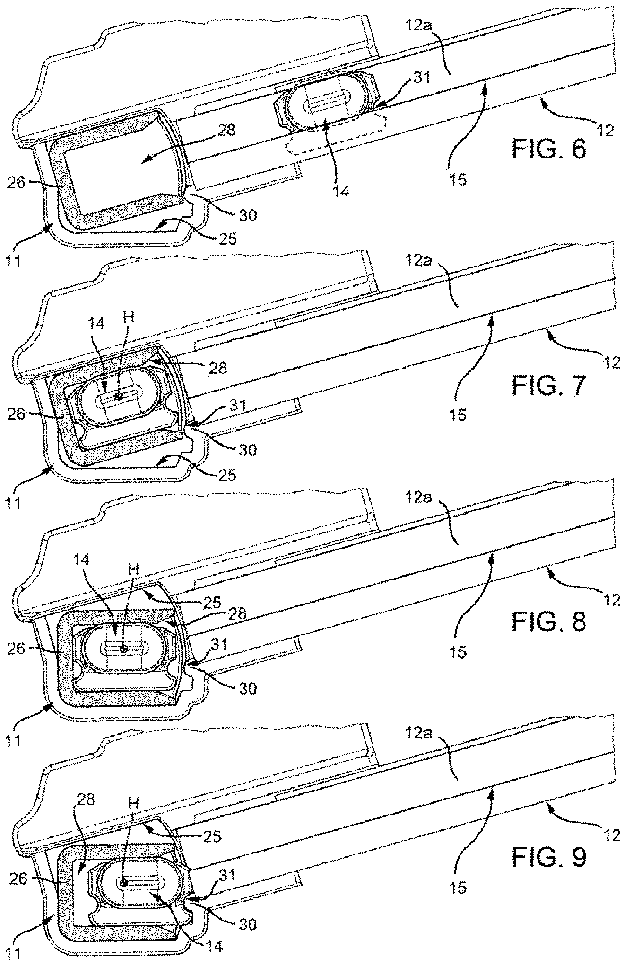

In other words, support elements 26 are brought in a separating position, where continuity between support elements 26 and guide device 12 is interrupted and frame 11 interferes with the freedom of movement of rod 14. In the embodiment shown, frame 11 closes receptacles defined by support elements 26, such that rod 14 lying on support elements 26 (Figures 8, 9) remains entrapped in a niche 28 defined by frame 11 and support elements 26.

Preferably, the restraining device associated to first sun visor 15 comprises at least one engagement member 30 carried in a fixed position by frame 11, in particular making part of frame 11, and engaging with rod 14 in a releasable manner when the latter is in the locking position, such as to limit mobility of rod 14 and, in particular, to block swiveling of support elements 26.

In particular, the rod 14 is prevented from moving transversally to the driving direction of vehicle 1.

In the embodiment shown, two engagement members 30 are provided as protrusion towards locking seat 25 for engaging with respective seats 31 provided in the rod 14.

In Figure 9, only one engagement member 30 and seat 31 are illustrated, being preferably identical to the others not shown.

Engagement members 30 are arranged below the front end of guide device 12 at a back portion of locking seat 25; in such a manner, rod 14 is pulled back by the return device for first sun visor 15 when carried by support elements 26 in the separating position. In particular, rod 14 slides along support elements 26 toward the engagement members 30, i.e. along an opposite direction to the driving direction, until seats 31 are engaged by engagement members 30. Here, rod 14 reaches the locking position.

Handle 22 may be exploited by user for releasing the engagement between engagement members 30 and rod 14, in particular by pushing handle 22 toward handle 23. Then, once rod 14 slides along support elements 26 away from engagement members 30, support elements 26 can swivel about hinge axis H to come back to the receiving position, for instance by means of the aforementioned elastic reactions. Here, rod 14 can move toward the back end of guide device 12.

Evidently, the spacing between backs 24a, 24b is sufficient to allow the maneuver just described.

The operation of the sunshade assembly 10 is herein described with reference to Figures 6-9.

The user of vehicle 1 pushes handle 22 along first direction A toward the front wall 3; accordingly, rod 14 moves toward support members 26 maintained in the receiving position by the torsional spring (Figure 6).

Then, rod 14 reaches the incoming position and first sun visor 15 the deployed configuration, in which the top opening 8 is fully covered (Figure 7). Here, the user pulls down handle 22 to overcome the elastic reaction of the torsional spring and bring support members 26 in the separating position (Figure 8). The user releases handle 22 and the return device of sun visor 15 causes the sliding of rod 14 toward engagement members 30 within niche 28.

Hence, rod 14 reaches the locking position when engagement members 30 engage seats 31, where first sun visor 15 is still in the deployed configuration (Figure 9). At this point, the user pulls down handle 23 until end 17 reaches the position farthest to rod 14, i.e. until second sun visor 16 reaches the deployed configuration, in which cover a portion of the front windscreen 7.

Here, the aforementioned trigger mechanism activates and the deployable shade device 13 is fully deployed and in use.

To bring the second sun visor 16 in the retracted configuration, the user pulls down the handle 23 to release the trigger mechanism and, successively, release the same handle 23 such that the corresponding return device bring the second sun visor 16 in the retracted configuration.

The maneuvers for bringing the first sun visor 15 in the retracted configuration are specular to the ones already described for bringing the same in the and, therefore, are not further specified in detail.

In view of the foregoing, the advantages of the roof assembly according to the invention are apparent.

Frame 11, defining locking seat 25, is compact and simple to be manufactured. Within locking seat 25, rod 14 has a reduced space to move but sufficient to keep efficiently the deployed configuration of first sun visor 15.

Support elements 36 are the only movable components that are coupled to frame 11, thus rendering sunshade assembly 10 particularly simple, cost effective, and reliable. In addition, support elements 36 play a convenient supporting role for rod 14, which can therefore enter and move smoothly within locking seat 25.

The optional second sun visor 16 carried by the same rod 14 for carrying also first sun visor 15 is useful to cover part of the front windscreen 7, so as to solve the problem of implementing a dedicated sun visor in the presence of an opened roof, like roof 4.

Furthermore, the particular choose of roller blind 21 for sun visor 16 is extremely convenient, since only a traction force need to be exerted on frame 11 through rod 14 to deploy second sun visor 16. On the contrary, a torque and a force are needed according to known solutions with a pivotal front sun visor.

Eventually, it is apparent that handles 22, 23 are arranged strategically, in such a manner that a user is able to deploy the deployable shade device 13 with very simple gestures.

It is clear that modifications can be made to the described roof assembly without departing from the scope of protection defined by the appended set of claims.

For example, guide device 12 may have a different shape or have different constructional features; in particular, only a single guide member may define guide device 12. Moreover, frame 11 may directly define guide device 12.

Components like the second sun visor 16 or support elements 26 are not strictly necessary, so that they can be even lacking.

Support elements 26 may be replaced by a single beam extending transversally to first direction A and shaped to receive rod 14 in the incoming position.

Axis C, around which roller blind 20 is wound may be fixed to frame 11 or roof 4, whereas end 15a may be carried by rod 14.

Finally, engagement members 30 may be replaced by a single engagement member with different shape or being differently arranged with respect to frame 11. Moreover, engagement member 30 may be replaced by a seat, instead of a protrusion, engaged by a corresponding protrusion on rod 14.

Engagement members 30 are not essential to carry out the function of preventing rod 14 from escaping from locking seat 25, since the walls defining locking seat 25 may form a sufficient barrier for rod 14.

Moreover, engagement members 30 may be replaced by locking means such as an elastic element or an impulsive actuator configured to push and maintain rod 14, or support elements 26 in the locking position or in the separating position, respectively, i.e. prevent a displacement of rod 14 toward the incoming position from the locking position.

## Claims

1. A roof assembly for a vehicle (1), comprising a vehicular roof (4) provided with a light admitting portion (8) and a sunshade assembly (10) carried by said vehicular roof (4), the sunshade assembly (10) comprising:
• a guide device (12) fixed with respect to said vehicular roof (4);
• a deployable shade device (13) comprising a sliding support (14) coupled to said guide device (12) in a sliding manner along a first direction (A) and a first sun visor (15) having an end carried by said sliding support (14) and being extensible, so as to be configurable, in reply to a corresponding sliding of said sliding support (14), between a retracted configuration and a deployed configuration, in which respectively reaches a smaller and a larger extension;
• restraining means (26, 11, 30) configured to cooperate in contact with said deployable shade device (13) to keep said first sun visor (15) in the deployed configuration, in which said first sun visor (15) covers said light admitting portion (8); and
• a locking seat (25) adjoined to an end portion of said guide device (12), so as to receive said sliding support (14) when said first sun visor (15) is in the deployed configuration;
said assembly is **characterized in that** said sliding support (14) is movable within said locking seat (25) between an incoming position, in which said sliding support (14) is aligned with said guide device (12) to engage therewith, and a locking position, in which said deployable shade device (13) cooperates in contact with said restraining means (26, 11, 30), such that said sliding support (14) is prevented from escaping from said locking seat (25);
and wherein said restraining means (26, 11, 30) comprises releasable locking means configured to exert a locking action onto said sliding support (14) when in the locking position to prevent said locking position to move toward the incoming position
and wherein said locking means comprises at least one engagement member (30) fixed with respect to said roof (4), engaging in a releasable manner with said sliding support (14) while in the locking position, and configured at least to limit mobility of said sliding support (14) when engaged therewith.

2. The roof assembly of claim 1, wherein said restraining means (26, 11, 30) comprise a support member (26) within said locking seat (25), said support member being movable within said locking seat (25) between a first position, in which defines an extension of said guide device (12) for supporting said sliding support (14) in the incoming position, and a second position, in which continuity with said guide device (12) is interrupted to maintain said sliding support (14) within said locking seat (25).

3. The roof assembly of claim 2, wherein said support member (26) is movable in a swiveling manner about a hinge axis (H) between the first and the second position.

4. The roof assembly of claim 2 or 3, wherein said sliding support (14) is supported in a sliding manner by said support element (26), so as to be movable away from and toward said locking position when said support member (26) is in the second position.

5. The roof assembly of any one of the foregoing claims, wherein said deployable shade device (13) comprises a second sun visor (16), which is carried by said sliding support (14) in a moving manner for covering a front light admitting portion (7) of said vehicle (1), according to a normal driving direction of said vehicle (1).

6. The roof assembly of claim 5, wherein said second sun visor (16) is extensible along a second direction (B) transversal to said first direction (A); said second sun visor (16) having an end (17) movable between a closest position and a farthest position with respect to said sliding support (14).

7. The roof assembly of claim 6, wherein said second sun visor (16) comprises a flexible curtain (21) woundable about a respective winding axis (D) fixed with respect to said sliding support (14).

8. The roof assembly of claim 6 or 7, further comprising:
• a first handle (22) carried in a fixed position by said sliding support (14) and suitable for being pushed to move said sliding support (14) along said first direction (A); and
• a second handle (23) carried in a fixed position by said second visor (16) and suitable for being pulled to move the end (17) of said second sun visor (16) in the farthest position;
wherein said first handle and said second handle (22, 23) have respective back portions (24a, 24b) facing one another along said first direction (A) when the end (17) of said second sun visor (16) is in the closest position.

9. A vehicle (1), in particular for agricultural use, comprising a roof assembly according to any one of the preceding claims.

10. A vehicle (1), in particular for agricultural use, comprising:
• a front light admitting portion (7), according to a normal driving direction of said vehicle (1); and
• a roof assembly of claim 7 or 8;
said second sun visor (16) covering said front light admitting portion (7) when the end (17) of said second sun visor (16) is in the farthest position.

## Patentansprüche

1. Dachanordnung für ein Fahrzeug (1) mit einem Fahrzeugdach (4), das mit einem lichtdurchlässigen Abschnitt (8) und einer Sonnenblendenanordnung (10) versehen ist, die von dem Fahrzeugdach (4) getragen ist, wobei die Sonnenblendenanordnung (10) aufweist:
• eine Führungsvorrichtung (12), die in Bezug zu dem Fahrzeugdach (4) festgelegt ist;
• eine ausfahrbare Blendenvorrichtung (13), die ein Gleitlager (14), das mit der Führungsvorrichtung (12) in einer gleitenden Art und Weise entlang einer ersten Richtung (A) gekoppelt ist, und eine erste Sonnenblende (15) mit einem Ende, das von dem Gleitlager (14) getragen wird, und welche ausziehbar ist, so dass sie in Reaktion auf ein entsprechendes Gleiten des Gleitlagers (14) zwischen einer zurückgezogenen Einstellung und einer ausgefahrenen Einstellung verstellbar ist, in der sie entsprechend eine kleinere und eine größere Erstreckung erreicht;
• Rückhalteelemente (26, 11, 30), die dazu eingerichtet sind, in Kontakt mit der ausfahrbaren Blendenvorrichtung (13) zusammenzuwirken, um die erste Sonnenblende (15) in der ausgefahrenen Einstellung zu halten, in der die erste Sonnenblende (15) den lichtdurchlässigen Abschnitt (8) bedeckt; und
• einen Verriegelungssitz (25), der an einen Endabschnitt der Führungsvorrichtung (12) angrenzt, um das Gleitlager (14) aufzunehmen, wenn die erste Sonnenblende (15) sich in der ausgefahrenen Einstellung befindet;
wobei die Anordnung **dadurch gekennzeichnet ist, dass**
das Gleitlager (14) innerhalb des Verriegelungssitzes (25) zwischen einer Eintrittsposition, in der das Gleitlager (14) zu der Führungsvorrichtung (12) ausgerichtet ist, um mit dieser einzugreifen, und einer Verriegelungsposition, in der die ausfahrbare Blendenvorrichtung (13) in Kontakt mit den Rückhalteelementen (26, 11, 30) zusammenwirkt, so dass das Gleitlager (14) davon abgehalten wird, aus dem Verriegelungssitz (25) auszutreten;
und wobei die Rückhalteelemente (26, 11, 30) lösbare Verriegelungsmittel aufweisen, die dazu eingerichtet sind, eine Verriegelungsbetätigung auf das Gleitlager (14) auszuüben, wenn es sich in der Verriegelungsposition befindet, um zu verhindern, dass die Verriegelungsposition sich in Richtung der Eintrittsposition bewegt;
und wobei die Verriegelungsmittel zumindest ein Eingriffselement (30) aufweisen, das in Bezug zu dem Dach (4) festgelegt ist, das in einer lösbaren Weise in das Gleitlager (14) eingreift, während es sich in der Verriegelungsposition befindet, und das dazu eingerichtet ist, zumindest die Beweglichkeit des Gleitlagers (14) zu beschränken, wenn es damit eingreift.

2. Dachanordnung nach Anspruch 1, wobei die Rückhalteelemente (26, 11, 30) ein Tragelement (26) innerhalb des Verriegelungssitzes (25) aufweisen, wobei das Tragelement innerhalb des Verriegelungssitzes (25) zwischen einer ersten Position, in der es eine Verlängerung der Führungsvorrichtung (12) zum Abstützen des Gleitlagers (14) in der Eintrittsposition definiert, und einer zweiten Position bewegbar ist, in der eine Kontinuität mit der Führungsvorrichtung (12) unterbrochen ist, um das Gleitlager (14) innerhalb des Verriegelungssitzes (25) zu halten.

3. Dachanordnung nach Anspruch 2, wobei das Tragelement (26) in einer schwenkbaren Weise um eine Gelenkachse (H) zwischen der ersten und der zweiten Position bewegbar ist.

4. Dachanordnung nach Anspruch 2 oder 3, wobei das Gleitlager (14) in einer gleitenden Weise durch das Tragelement (26) abgestützt ist, so dass es von und in Richtung der Verriegelungsposition beweglich ist, wenn das Tragelement (26) sich in der zweiten Position befindet.

5. Dachanordnung nach einem der vorhergehenden Ansprüche, wobei die ausfahrbare Blendenvorrichtung (13) eine zweite Sonnenblende (16) aufweist, die von dem Gleitlager (14) in einer bewegbaren Weise zur Abdeckung eines vorderen lichtdurchlässigen Abschnitts (7) des Fahrzeugs (1) in normaler Fahrtrichtung des Fahrzeugs (1) getragen wird.

6. Dachanordnung nach Anspruch 5, wobei die zweite Sonnenblende (16) entlang einer zweiten Richtung (B), quer zur ersten Richtung (A), verlängerbar ist; wobei die zweite Sonnenblende (16) ein Ende (17) aufweist, das zwischen einer nächstgelegenen Position und einer entferntesten Position in Bezug zu dem Gleitlager (14) bewegbar ist.

7. Dachanordnung nach Anspruch 6, wobei die zweite Sonnenblende (16) einen flexiblen Vorhang (21) aufweist, der um eine entsprechende Haspelachse (D), die in Bezug zu dem Gleitlager (14) festgelegt ist, aufwickelbar ist.

8. Dachanordnung Anspruch 6 oder 7, die des Weiteren aufweist:
• einen ersten Griff (22), der in einer festgelegten Position von dem Gleitlager (14) getragen und dazu eingerichtet ist, gedrückt zu werden, um das Gleitlager (14) entlang der ersten Richtung (A) zu bewegen; und
• einen zweiten Griff (23), der in einer festgelegten Position von der zweiten Sonnenblende (16) getragen und dazu eingerichtet ist, gezogen zu werden, um das Ende (17) der zweiten Sonnenblende (16) in die entfernteste Position zu bewegen;
wobei der erste Griff und der zweite Griff (20, 23) entsprechende Rückenabschnitte (24a, 24b) aufweisen, die entlang der ersten Richtung (A) einander gegenüber liegen, wenn das Ende (17) der zweiten Sonnenblende (16) sich in der nächstgelegenen Position befinden.

9. Fahrzeug (1), insbesondere zur landwirtschaftlichen Verwendung, das eine Dachanordnung nach einem der vorhergehenden Ansprüche aufweist.

10. Fahrzeug (1), insbesondere zur landwirtschaftlichen Verwendung, mit:
• einem vorderen lichtdurchlässigen Abschnitt (7) in normaler Fahrtrichtung des Fahrzeugs (1); und
• einer Dachanordnung nach Anspruch 7 oder 8;
wobei die zweite Sonnenblende (16) den vorderen lichtdurchlässigen Abschnitt (7) bedeckt, wenn das Ende (17) der zweiten Sonnenblende (16) sich in der entferntesten Position befindet.

## Revendications

1. Un ensemble toit pour un véhicule (1), comprenant un toit de véhicule (4) comportant une partie pouvant accueillir un éclairage (8) et un ensemble pare-soleil (10) soutenu par ledit toit de véhicule (4), l'ensemble pare-soleil (10) comprenant :
• un dispositif de guidage (12) fixé par rapport audit toit de véhicule (4) ;
• un dispositif d'ombrage déployable (13) comprenant un support coulissant (14) couplé audit dispositif de guidage (12) de manière coulissante le long d'une première direction (A) et un premier pare-soleil (15) ayant une extrémité soutenue par ledit support coulissant (14) et étant extensible, de manière à être configurable, en réponse à un coulissement correspondant dudit support coulissant (14), entre une configuration rétractée et une configuration déployée, dans laquelle sont respectivement atteintes l'extension la plus courte et l'extension la plus longue ;
• des moyens de retenue (26, 11, 30) configurés pour coopérer en contact avec ledit dispositif d'ombrage déployable (13) afin de maintenir ledit premier pare-soleil (15) dans la configuration déployée, dans laquelle ledit premier pare-soleil (15) recouvre ladite partie laissant passer la lumière (8) ; et
• une butée de verrouillage (25) accolée à une partie finale dudit dispositif de guidage (12), de manière à recevoir ledit support coulissant (14) lorsque ledit premier pare-soleil (15) est dans la configuration déployée ;
ledit ensemble est **caractérisé en ce que**
ledit support coulissant (14) est mobile à l'intérieur de ladite butée de verrouillage (25) entre une position entrante, dans laquelle ledit support coulissant (14) est aligné avec ledit dispositif de guidage (12) afin de s'engager avec celui-ci, et une position de verrouillage, dans laquelle ledit dispositif d'ombrage déployable (13) coopère en contact avec lesdits moyens de retenue (26, 11, 30), de telle sorte que ledit support coulissant (14) ne peut pas s'échapper de ladite butée de verrouillage (25) ;
et dans lequel lesdits moyens de retenue (26, 11, 30) comprennent des moyens de verrouillage détachables configurés pour exercer une action de verrouillage sur ledit support coulissant (14) lorsqu'il est dans la position de verrouillage afin d'empêcher ladite position de verrouillage de se déplacer vers la position entrante
et dans lequel lesdits moyens de verrouillage comprennent au moins un élément d'engagement (30) fixé par rapport audit toit (4), s'engageant de manière détachable avec ledit support coulissant (14) lorsqu'il est dans la position de verrouillage, et configuré au minimum pour limiter la mobilité dudit support coulissant (14) lorsqu'il est engagé avec celui-ci.

2. L'ensemble toit selon la revendication 1, dans lequel lesdits moyens de retenue (26, 11, 30) comprennent un élément de support (26) à l'intérieur de ladite butée de verrouillage (25), ledit élément de support étant mobile à l'intérieur de ladite butée de verrouillage (25) entre une première position, dans laquelle une extension dudit dispositif de guidage (12) soutient ledit support coulissant (14) dans la position entrante, et une seconde position, dans laquelle la continuité avec ledit dispositif de guidage (12) est interrompue pour maintenir ledit support coulissant (14) à l'intérieur de ladite butée de verrouillage (25).

3. L'ensemble toit selon la revendication 2, dans lequel ledit élément de soutien (26) est mobile de manière pivotante autour d'un axe charnière (H) entre la première et la seconde position.

4. L'ensemble toit selon la revendication 2 ou la revendication 3, dans lequel ledit support coulissant (14) est soutenu de manière coulissante par ledit élément de soutien (26), de manière à pouvoir être déplacé vers et depuis ladite position de verrouillage lorsque ledit élément de soutien (26) est dans la seconde position.

5. L'ensemble toit selon l'une quelconque des revendications précédentes, dans lequel ledit dispositif d'ombrage déployable (13) comprend un second pare-soleil (16), qui est soutenu par ledit support coulissant (14) de manière mobile afin de couvrir une partie laissant passer la lumière à l'avant (7) dudit véhicule (1), selon une direction de conduite normale dudit véhicule (1).

6. L'ensemble toit selon la revendication 5, dans lequel ledit second pare-soleil (16) est extensible selon une seconde direction (B) transversale à ladite première direction (A) ; ledit second pare-soleil (16) ayant une extrémité (17) mobile entre une position la plus proche et une position la plus éloignée par rapport audit support coulissant (14).

7. L'ensemble toit selon la revendication 6, dans lequel ledit second pare-soleil (16) comprend un store flexible (21) pouvant être enroulé autour d'un axe d'enroulement respectif (D) fixé par rapport audit support coulissant (14).

8. L'ensemble toit selon la revendication 6 ou la revendication 7, comprenant en outre :
• une première poignée (22) soutenue dans une position fixe par ledit support coulissant (14) et pouvant être poussée pour déplacer ledit support coulissant (14) le long de ladite première direction (A) ; et
• une seconde poignée (23) supportée dans une position fixe par ledit second pare-soleil (16) et apte à être tirée pour déplacer l'extrémité (17) dudit second pare-soleil (16) dans la position la plus éloignée ;
dans lequel ladite première poignée et ladite seconde poignée (22, 23) ont des parties arrière respectives (24a, 24b) se faisant face le long de ladite première direction (A) lorsque l'extrémité (17) dudit second pare-soleil (16) se trouve dans la position la plus proche.

9. Un véhicule (1), notamment à usage agricole, comprenant un ensemble toit selon l'une quelconque des revendications précédentes.

10. Un véhicule (1), notamment à usage agricole, comprenant :
• une partie laissant passer la lumière à l'avant (7), selon une direction de conduite normale dudit véhicule (1) ; et
• un ensemble toit selon la revendication 7 ou la revendication 8 ;
ledit second pare-soleil (16) recouvrant ladite partie laissant passer la lumière à l'avant (7) lorsque l'extrémité (17) dudit second pare-soleil (16) se trouve dans la position la plus éloignée.
